# EUROPEAN PATENT SPECIFICATION

(11) **EP 3 028 888 B1**
(45) Date of publication and mention of the grant of the patent: **13.09.2017**
(21) Application number: 15194448.5
(22) Date of filing: 13.11.2015
(51) Int. Cl.: B60K 11/02, H02K 9/19, H02K 1/32, H02K 5/20, H02K 7/00

(54) **MOTOR COOLING SYSTEM**
MOTORKÜHLSYSTEM
SYSTÈME DE REFROIDISSEMENT DE MOTEUR

(30) Priority: 04.12.2014 US 201414560680; 04.12.2014 US 201414560950
(43) Date of publication of application: 08.06.2016
(73) Proprietor: Atieva, Inc., Menlo Park, CA 94025 (US)
(72) Inventor: GAUTHIER, Jean-Philippe, San Francisco, CA 94115 (US); MAYER, Jeremy, Mountain View, CA 94041 (US); TANG, Yifan, Los Altos, CA 94022 (US)
(74) Representative: Ungerer, Olaf

(56) References cited:
- DE-A1- 19 810 437
- DE-A1-102012 022 453
- JP-U- S54 607
- US-A1- 2012 104 884

## Description

### FIELD OF THE INVENTION

The present invention relates generally to the electric motor assembly of an electric vehicle and, more particularly, to an efficient motor cooling system that can be used to cool the critical elements of the motor assembly.

### BACKGROUND OF THE INVENTION

In response to the demands of consumers who are driven both by ever-escalating fuel prices and the dire consequences of global warming, the automobile industry is slowly starting to embrace the need for ultra-low emission, high efficiency cars. While some within the industry are attempting to achieve these goals by engineering more efficient internal combustion engines, others are incorporating hybrid or all-electric drive trains into their vehicle line-ups. To meet consumer expectations, however, the automobile industry must not only achieve a greener drive train, but must do so while maintaining reasonable levels of performance, range, reliability, safety and cost.

The most common approach to achieving a low emission, high efficiency car is through the use of a hybrid drive train in which an internal combustion engine (ICE) is combined with one or more electric motors. While hybrid vehicles provide improved gas mileage and lower vehicle emissions than a conventional ICE-based vehicle, due to their inclusion of an internal combustion engine they still emit harmful pollution, albeit at a reduced level compared to a conventional vehicle. Additionally, due to the inclusion of both an internal combustion engine and an electric motor(s) with its accompanying battery pack, the drive train of a hybrid vehicle is typically much more complex than that of either a conventional ICE-based vehicle or an all-electric vehicle, resulting in increased cost and weight. Accordingly, several vehicle manufacturers are designing vehicles that only utilize an electric motor, or multiple electric motors, thereby eliminating one source of pollution while significantly reducing drive train complexity.

In order to achieve the desired levels of performance and reliability in an electric vehicle, it is critical that the temperature of the traction motor remains within its specified operating range regardless of ambient conditions or how hard the vehicle is being driven. A variety of approaches have been used to try and adequately cool the motor in an electric car. For example, U.S. Patent 6,191,511 discloses a motor that incorporates a closed cooling loop in which the coolant is pumped through the rotor. A stationary axial tube mounted within the hollow rotor injects the coolant while a series of blades within the rotor assembly pump the coolant back out of the rotor and around the stator. Heat withdrawal is accomplished using fins integrated into the motor casing that allow cooling via ambient air flow.

U.S. Patent No. 7,156,195 discloses a cooling system for use with the electric motor of a vehicle. The refrigerant used in the cooling system passes through an in-shaft passage provided in the output shaft of the motor as well as the reduction gear shaft. A refrigerant reservoir is formed in the lower portion of the gear case while an externally mounted cooler is used to cool the refrigerant down to the desired temperature.

U.S. Patent No. 7,489,057 discloses a rotor assembly cooling system utilizing a hollow rotor shaft. The coolant feed tube that injects the coolant into the rotor shaft is rigidly coupled to the rotor shaft using one or more support members. As a result, the rotor and the injection tube rotate at the same rate. The coolant that is pumped through the injection tube flows against the inside surface of the rotor shaft, thereby extracting heat from the assembly.

The DE 10 1012 02245, which constitutes the closest prior art according to the preamble of claim 1, discloses a motor assembly with an integrated cooling system, comprising a stator, a rotor shaft, a rotor mounted on the rotor shaft, a coolant pump, and a coolant reservoir, wherein the rotor shaft comprises a shaft channel through which a cooling liquid can be guided. More specifically, the cooling liquid is guided into the shaft channel via the end surface of the rotor shaft.

Similarly, the JP S54 607 U discloses a motor assembly with an integrated cooling system, comprising a stator, a rotor shaft, a rotor mounted on the rotor shaft, a coolant pump, and a coolant reservoir, wherein a cooling liquid is guided into the interior of the rotor shaft via the end surface of the rotor shaft.

While there are a variety of techniques that may be used to cool an electric vehicle's motor, these techniques typically only provide limited heat withdrawal. Accordingly, what is needed is an effective cooling system that may be used with the high power density, compact electric motors used in high performance electric vehicles. The present invention provides such a cooling system.

### SUMMARY OF THE INVENTION

The present invention provides a motor assembly with an integrated cooling system comprising: (i) a stator contained within a motor enclosure; (ii) a rotor shaft, wherein the rotor shaft passes between a first end cap and a second end cap of the motor enclosure; (iii) a rotor mounted to the rotor shaft, where the rotor shaft includes a hollow region; (iv) a coolant pump (i.e., an electric coolant pump or a mechanical coolant pump) for injecting coolant (e.g., oil) into the motor assembly; (v) a coolant reservoir in fluid communication with the coolant pump; (vi) a first coolant passageway, wherein the first coolant passageway is integral to the first end cap, wherein the first coolant passageway fluidly couples the coolant pump to the hollow region of the rotor shaft, wherein the first coolant passageway further comprises an output aperture located within a bore of the first end cap and adjacent to the rotor shaft, wherein the rotor shaft includes at least one intake thru-hole, wherein the coolant flowing through the first coolant passageway and through the output aperture is injected by the coolant pump into the hollow region of the rotor via the at least one intake thru-hole; (vii) a first seal and a second seal, wherein the first seal and the second seal confines the coolant passing through the first coolant passageway and through the output aperture within a region defined by the rotor shaft, the bore of the first end cap, the first seal and the second seal; (viii) a second coolant passageway, where the second coolant passageway fluidly couples a region within the motor enclosure to the coolant reservoir, and wherein the coolant within the region of the motor enclosure flows into the coolant reservoir via the second coolant passageway; and (ix) a plurality of distribution thru-holes integrated into the rotor shaft, wherein each of the plurality of distribution thru-holes fluidly couples the hollow region of the rotor shaft to the region within the motor enclosure, wherein the coolant passing from the hollow region to the region within the motor enclosure directly contacts the stator and the rotor prior to flowing through the second passageway into the coolant reservoir. The plurality of thru-holes may have at least one thru-hole located adjacent to the first end of the rotor and at least one thru-hole located adjacent to the second end of the rotor. The axis of each of the plurality of thru-holes may be perpendicular to the cylindrical axis of the rotor shaft. The axis of each of the plurality of thru-holes may be angled relative to the cylindrical axis of the rotor shaft.

In another aspect, the first coolant passageway may further include a gearbox coolant coupling, where the gearbox coolant coupling fluidly couples the first coolant passageway to a gearbox, where the coolant flowing through the first coolant passageway is injected by the coolant pump into the gearbox via the gearbox coolant coupling, where a third coolant passageway fluidly couples the gearbox to the coolant reservoir, and where the coolant flowing into the gearbox from the first coolant passageway via the gearbox coolant coupling flows into the coolant reservoir via the third coolant passageway.

In another aspect, the motor enclosure may further include an enclosure output aperture located between the stator and an inner wall of the motor enclosure, and where the coolant within the region of the motor enclosure passes through the output aperture and the second passageway before flowing into the coolant reservoir.

In another aspect, the assembly may include a third coolant passageway that fluidly couples the coolant pump to the region within said motor enclosure, where the coolant flowing through the third coolant passageway is directly injected by the coolant pump into the region of the motor enclosure. The assembly may further include a plurality of nozzles that are incorporated into the motor enclosure (e.g., the motor casing), where each of the plurality of nozzles is fluidly coupled to the third coolant passageway, and where coolant passing from the third coolant passageway to the motor enclosure via the plurality of nozzles directly contacts the stator and the rotor prior to flowing through the second passageway into the coolant reservoir. At least a portion of the plurality of nozzles may be located adjacent to the stator end windings.

In another aspect, the assembly may include a third coolant passageway that fluidly couples a second coolant pump to the region within the motor enclosure, where the coolant flowing through the third coolant passageway is directly injected by the second coolant pump into the region of the motor enclosure. The assembly may further include a plurality of nozzles that are incorporated into the motor enclosure (e.g., the motor casing), where each of the plurality of nozzles is fluidly coupled to the third coolant passageway, and where coolant passing from the third coolant passageway to the motor enclosure via the plurality of nozzles directly contacts the stator and the rotor prior to flowing through the second passageway into the coolant reservoir. At least a portion of the plurality of nozzles may be located adjacent to the stator end windings.

In another aspect, the assembly may include a coolant jacket surrounding at least a portion of the motor assembly, where a secondary coolant (e.g., a water-based coolant) flows through the coolant jacket, and where a second cooling pump circulates the secondary coolant throughout the coolant jacket via a cooling conduit. The cooling jacket may be integrated within a motor casing.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a simplified cross-sectional view of the primary elements of a motor assembly utilizing a pressurized cooling system in accordance with a preferred embodiment of the invention;
Fig. 2 provides a cross-sectional view of a portion of the rotor shaft shown in Fig. 1;
Fig. 3 provides a cross-sectional view of the portion of the rotor shaft shown in Fig. 2, modified to include additional coolant thru-holes;
Fig. 4 provides a cross-sectional view of the motor assembly shown in Fig. 1, modified to optimize the trajectory of the coolant flowing out of the rotor shaft and into the motor enclosure;
Fig. 5 provides a cross-sectional view of the motor assembly shown in Fig. 1, modified to include gearbox cooling;
Fig. 6 provides a cross-sectional view of the motor assembly shown in Fig. 1, modified to incorporate an integrated coolant pump;
Fig. 7 provides a cross-sectional view of the motor assembly shown in Fig. 1, modified to incorporate a non-pressurized coolant injection system;
Fig. 8 provides a cross-sectional view of the motor assembly shown in Fig. 1, modified to use a non-pressurized coolant injection system to inject coolant directly into the motor housing;
Fig. 9 provides a cross-sectional view of a motor assembly utilizing a non-pressurized coolant injection system to inject coolant into the rotor shaft as shown in Fig. 7 and directly into the motor housing as shown in Fig. 8; and
Fig. 10 provides a cross-sectional view of the motor assembly shown in Fig. 9, modified to incorporate a water-based cooling system in the motor casing.

### DESCRIPTION OF THE SPECIFIC EMBODIMENTS

As used herein, the singular forms "a", "an" and "the" are intended to include the plural forms as well, unless the context clearly indicates otherwise. The terms "comprises", "comprising", "includes", and/or "including", as used herein, specify the presence of stated features, integers, steps, operations, elements, and/or components, but do not preclude the presence or addition of one or more other features, integers, steps, operations, elements, components, and/or groups thereof. As used herein, the term "and/or" and the symbol "/" are meant to include any and all combinations of one or more of the associated listed items. Additionally, while the terms first, second, etc. may be used herein to describe various steps or calculations, these steps or calculations should not be limited by these terms, rather these terms are only used to distinguish one step or calculation from another. For example, a first calculation could be termed a second calculation, similarly, a first step could be termed a second step, similarly, a first component could be termed a second component, all without departing from the scope of this disclosure.

The motor and cooling systems described and illustrated herein are generally designed for use in a vehicle using an electric motor, e.g., an electric vehicle (EV), and may be used with a single speed transmission, a dual-speed transmission, or a multi-speed transmission. In the following text, the terms "electric vehicle" and "EV" may be used interchangeably and may refer to an all-electric vehicle, a plug-in hybrid vehicle, also referred to as a PHEV, or a hybrid vehicle, also referred to as a HEV, where a hybrid vehicle utilizes multiple sources of propulsion including an electric drive system.

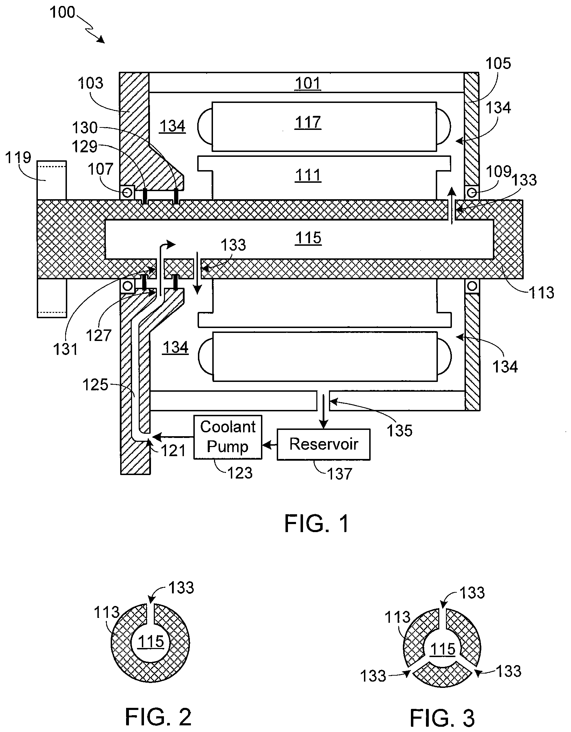

Fig. 1 provides a cross-sectional view of the primary elements of a motor and integrated cooling system 100. In at least one embodiment, the motor housing is a multi-piece housing comprised of a cylindrical motor casing 101 that is mechanically coupled to front and rear end caps 103 and 105, respectively. The motor's core assembly, which is supported on either end by bearing assemblies 107 and 109, includes the rotor 111 and the rotor shaft 113. The center portion 115 of rotor shaft 113 is hollow. Also visible in this figure is stator 117.

At one end of rotor shaft 113 is a drive gear 119. Although not shown in this figure, drive gear 119 is contained within a gearbox (i.e., gear housing). The gearbox may be separate from motor 100; alternately, the gearbox or at least one wall of the gearbox may be integral with front motor housing member 103. An exemplary configuration utilizing an integrated motor/gearbox housing is shown in co-assigned U.S. Patent Application Serial No. 14/503,683, filed 1 October 2014, the disclosure of which is incorporated herein for any and all purposes.

Integrated into one of the end caps of the motor assembly, and preferably integrated into front motor end cap 103 as shown, is a coolant intake 121. Preferably the coolant is non-gaseous and has thermal and mechanical properties suitable for a liquid motor coolant, e.g., high heat capacity, high break-down temperature and a relatively low viscosity. Additionally, as the coolant flows between the rotor and stator as well as a small portion of the rotor shaft and the end cap, in the preferred embodiment the coolant is also a good lubricant and is electrically non-conductive. Accordingly, in at least one embodiment oil is used as the coolant.

In the preferred embodiment illustrated in Fig. 1, the coolant passing into intake 121 is pressurized via coolant pump 123. In this embodiment coolant pump 123 is an external pump, for example an electric pump, although other types of pumps may be used such as a mechanical pump powered by shaft 113 as described in detail below. Coolant intake 121 is coupled to a coolant passageway 125 that is preferably incorporated within end cap 103 as shown. Passageway 125 connects intake 121 to output aperture 127. Output aperture 127 is within the bore of end cap 103, and thus is immediately adjacent to rotor shaft 113. The coolant is confined within the region between rotor shaft 113 and the bore of end cap 103 by a pair of seals 129/130. Seals 129 and 130 are not limited to a particular type of seal; rather they may be comprised of any of a variety of different seal types (e.g., rotary shaft seals) that form an adequate seal between shaft 113 and end cap 103 while allowing the shaft to freely rotate within the motor housing. In the preferred embodiment seal rings 129/130 fit within grooves formed within the bore of end cap 103 and the outer surface of rotor shaft 113 as shown. Seals 129 and 130 may be fabricated from any of a variety of materials (e.g., fluorosilicone, nitrile, silicone, polyacrylate, FEP, etc.).

Rotor shaft 113 includes one or more intake thru-holes 131 immediately adjacent to the region defined by rotor shaft 113, the bore of end cap 103, and seals 129/130. Intake thru-hole(s) 131 allows coolant passing through coolant passageway 125 to flow into the central, hollow region 115 of rotor shaft 113. The coolant within region 115 is then forced out of shaft 113 through multiple thru-holes 133, this coolant flowing throughout region 134 of the motor enclosure. The coolant within the motor enclosure eventually flows through one or more output apertures 135 before being collected into coolant reservoir 137. Reservoir 137 is coupled to coolant pump 123. Preferably the motor enclosure output apertures 135 are incorporated into cylindrical motor casing 101, and more preferably into a central region of cylindrical motor casing 101 as shown, thus causing the coolant to flow completely around stator 117 before exiting the enclosure. The heat absorbed by the coolant can then be transferred to the ambient environment or to another thermal system (e.g., refrigeration system) using any of a variety of well-known techniques.

The embodiment described above provides efficient heat removal via multiple thermal pathways. Specifically, circulating the coolant throughout the system allows heat to be removed via direct transfer between the coolant and the rotor shaft (e.g., via region 115 within shaft 113), between the coolant and rotor 111, and between the coolant and the stator 117. This approach also effectively cools the motor bearings.

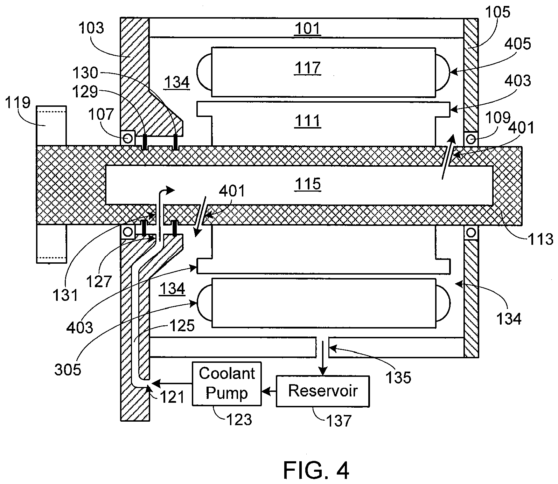

The coolant distribution thru-holes 133 may be configured in a variety of ways, depending upon flow rate, coolant pressure and the desired flow pattern. For example, in addition to controlling hole size, the number of thru-holes may be varied. For example, Fig. 2 shows a cross-sectional view of rotor shaft 113 with a single distribution hole 133 while Fig. 3 shows a similar cross-sectional view with three distribution thru-holes 133. Similarly, the placement and the angle of the thru-holes may be used to direct coolant flow within the motor enclosure. For example, in the motor and integrated cooling system shown in Fig. 4, the coolant distribution thru-holes 401 are angled to optimize coolant flow around rotor end-rings 403 and towards the stator end windings 405.

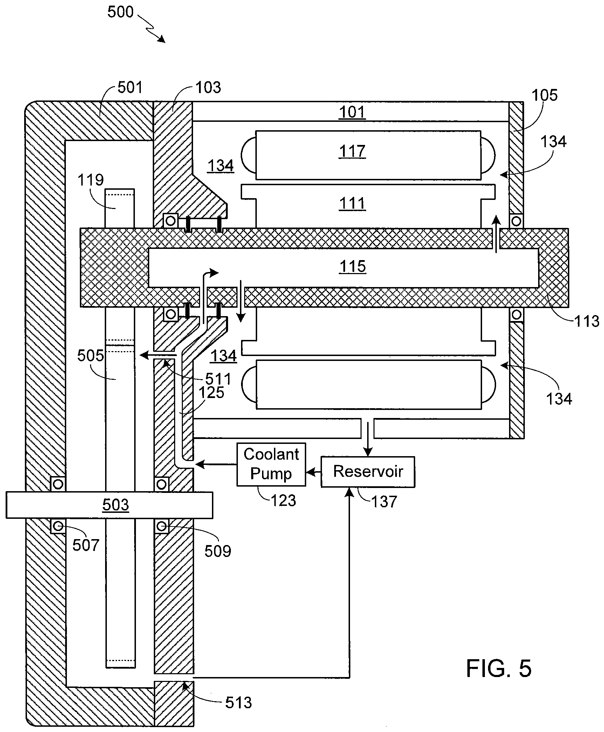

In addition to effectively cooling the critical elements of the motor, the cooling system illustrated in Figs. 1 and 4 can also be used to simultaneously cool the gearbox. Fig. 5 illustrates a variation of the previously illustrated motor modified to provide gearbox cooling. In system 500 the gearbox housing includes a front gearbox casing 501 that is coupled to front motor cap 103. It will be appreciated that the configuration of the gearbox does not impact the application of the cooling system. For example, the cooling system could also be used if the entire gearbox housing was integral to the front motor cap as described in co-assigned U.S. Patent Application Serial No. 14/503,683. The output drive shaft 503 is coupled to rotor shaft 115 via a plurality of gears (e.g., gears 119 and 505). Drive shaft 503 is supported on either end by bearing assemblies 507 and 509.

In system 500, the pressurized coolant (e.g., oil) is coupled via passageway 125 to the rotor shaft and motor assembly as previously described, and is also coupled to the gearbox via gearbox coolant coupling 511. If the gearbox housing includes a separate casing member rather than using end cap 103 as shown, the coolant coupling passes through the separate casing member as well as the end cap in order to effectively couple coolant passageway 125 to the gearbox. The coolant within the gearbox enclosure eventually flows through coolant passageway 513 before being collected in coolant reservoir 137 and recirculated.

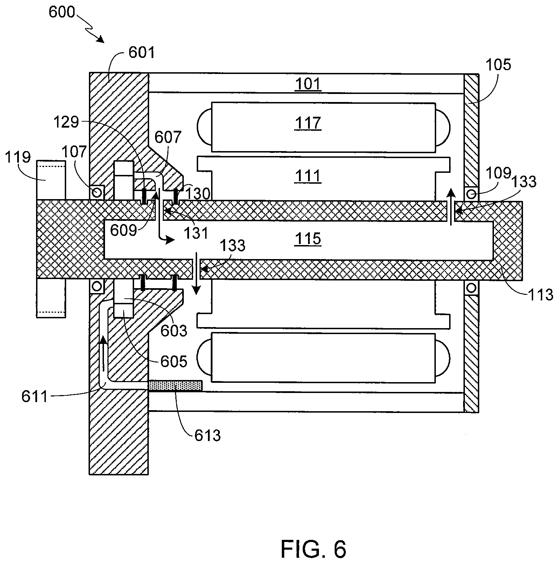

As previously noted, the embodiments shown in Figs. 1-5 may utilize either an external coolant pump, e.g., an electric coolant pump, or an integrated mechanical pump. Fig. 6 illustrates a variation of the embodiment shown in Fig. 1, modified to incorporate a mechanical coolant pump where the mechanical pump is powered by rotation of the rotor shaft. It should be understood that this modification is equally applicable to the configurations shown in Figs. 4 and 5.

In system 600, the motor end cap 601 has been modified from that of the previous embodiments in order to accommodate a mechanical coolant pump. The inner pump rotor 603 is coupled to rotor shaft 113 while the outer pump rotor 605 is fixed within end cap 601. As in the prior embodiment, the coolant, e.g., oil, is pressurized and pumped through a passageway, e.g., passageway 607, to an output aperture 609. Output aperture 609 is located within the bore of end cap 601 and immediately adjacent to the outer surface of rotor shaft 113. The coolant is confined within the region between rotor shaft 113 and the bore of end cap 601 by the pressurized dynamic seals 129/130.

As in the prior embodiments, after the coolant passes through aperture 609 and into the region defined by the rotor 113, end cap 60 and seals 129/130, the coolant is forced through intake thru-hole 131 into the hollow region 115 of rotor shaft 113. The coolant within region 115 is then forced out of shaft 113 through multiple thru-holes 133, this coolant flowing throughout the motor enclosure. A second coolant passageway 611, preferably integrated into end cap 601 as shown, provides a return flow path for the coolant to the integrated coolant pump. In the illustrated embodiment a filter 613 is incorporated into the coolant return. It should be understood that the mechanical coolant pump illustrated in Fig. 6 may also be used in a configuration such as that shown in either Figs. 4 or 5.

In the embodiments illustrated in Figs. 1-6 the coolant, e.g., oil, is pressurized in order to insure high coolant flow rates throughout the motor enclosure. If high flow rates are not required, for example if the motor is a low performance motor and is not expected to generate excessive heat levels, then a non-pressurized coolant injection technique may be used to inject the coolant into the hollow rotor shaft.

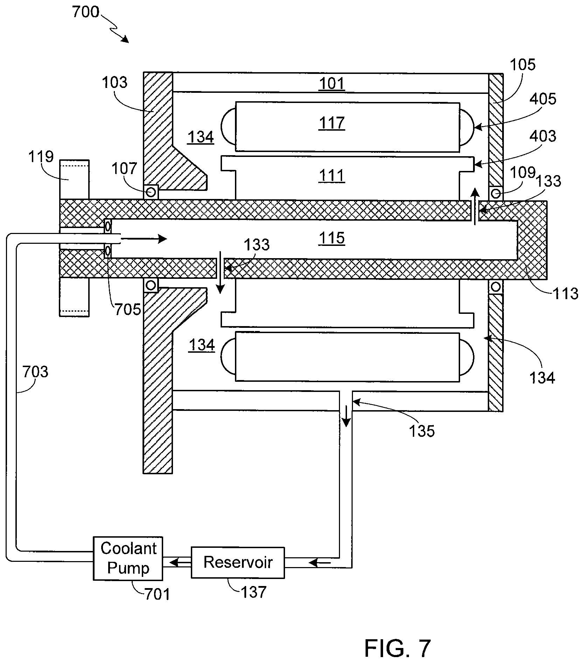

Fig. 7 illustrates a variation of the embodiment shown in Fig. 1, modified to incorporate a non-pressurized coolant injection system. It should be understood that this modification is equally applicable to other coolant distribution thru-hole configurations, depending upon desired flow rate and flow pattern. Thus the diameter, number and angle of the thru-holes may be varied as discussed above and illustrated in Figs. 2-4.

In system 700, coolant pump 701 (either an electrical or a mechanical coolant pump) pumps the coolant, preferably an oil as noted above, through injection tube 703 into one end of rotor shaft 113. Preferably injection tube 703 is stationary as shown. It will be appreciated that the injection tube can be installed in either end of the rotor shaft. Injection tube 703 is sealed within rotor shaft 113 via a seal 705, where seal 705 may be of any of a variety of different seal types (e.g., rotary shaft seals) that form an adequate seal between injection tube 703 and shaft 113 while allowing the shaft to freely rotate within the motor housing. Once the coolant is injected into rotor shaft 113, centrifugal force causes the coolant to pass through rotor shaft thru-holes 133 and into the motor enclosure. The coolant within the motor enclosure eventually flows through one or more output apertures 135 before being collected into coolant reservoir 137. Reservoir 137 is coupled to coolant pump 701.

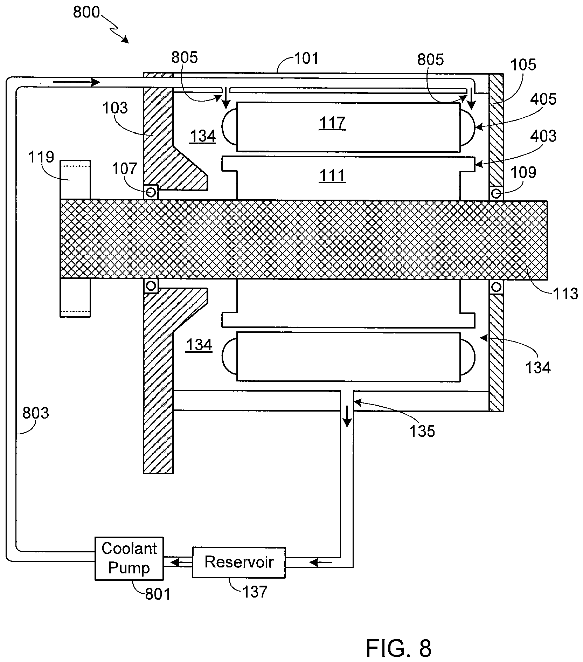

A non-pressurized coolant injection system may also be used to inject coolant directly into the motor enclosure as illustrated in Fig. 8. As shown, coolant pump 801 pumps coolant, preferably oil as previously disclosed, through coolant injection tube 803. Coolant injection tube 803 passes through the motor enclosure where it is terminated by one or more injection nozzles 805 located at either end of stator 117 and at or near the top of motor casing 101. As a result of this nozzle placement, gravity causes the coolant flowing out of nozzles 805 to pass over stator 117 and stator end windings 405 before eventually passing through one or more casing output apertures 135 located at or near the bottom of the casing and being collected in reservoir 137. It will be appreciated that at least some of the coolant flowing through nozzles 805 will be distributed throughout the motor enclosure by the spinning rotor 111 and rotor end-rings 403.

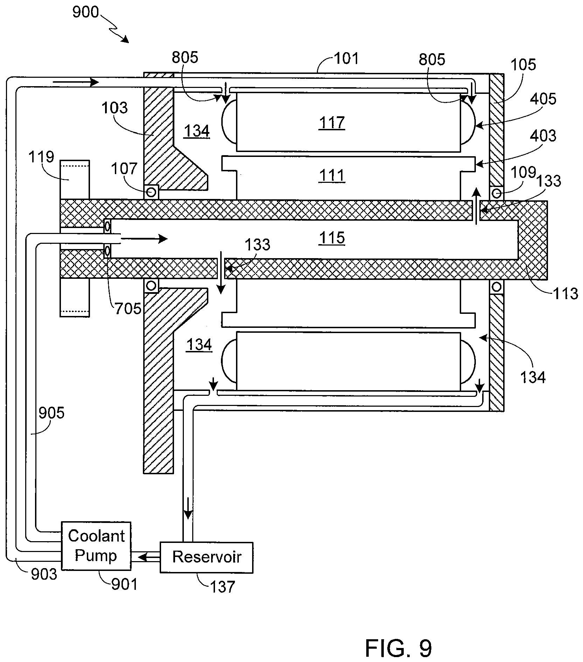

Motor assembly 900, shown in Fig. 9, combines the non-pressurized coolant injection systems of motors 700 and 800 shown in Figs. 7 and 8, respectively. As such, the coolant (e.g., oil) from reservoir 137 is pumped by coolant pump 901 (either an electrical or a mechanical coolant pump) directly onto stator 117 and stator end windings 405 via injection tube 903, and into rotor shaft 113 via injection tube 905. In addition to cooling the inside of the rotor assembly, the coolant within hollow region 115 of rotor shaft 113 distributes coolant throughout the motor enclosure via thru-holes 133, thereby insuring efficient cooling of the motor assembly. In at least one variation of this embodiment, two coolant pumps are used; one coolant pump injecting coolant directly onto stator 117 and stator end windings 405 via injection tube 903 and a second coolant pump injecting coolant into rotor shaft 113 via injection tube 905. Although the stator in assembly 900 may be mounted as shown in assembly 800, an alternate configuration is illustrated in which stator 117 is mounted directly to the inner surface of motor casing 101. As such, a return coolant passageway 905 is incorporated into casing 101, thereby providing a pathway for the coolant within the motor enclosure to flow into reservoir 137. Note that this same configuration may be used with the prior embodiments.

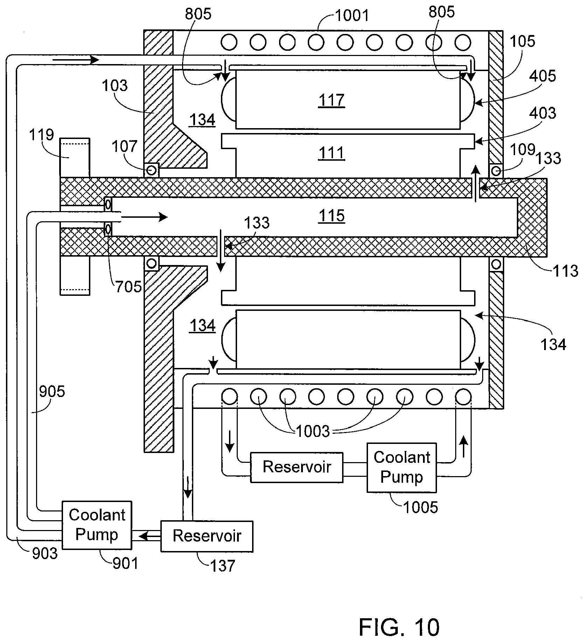

In the motor assembly shown in Fig. 10, in addition to using multiple coolant injection systems to force coolant (e.g., oil) throughout the motor assembly as in motor assembly 900, a secondary coolant system is used to cool the exterior of the motor assembly. The secondary coolant system includes a coolant jacket through which a second coolant passes. Preferably the second coolant is water-based, e.g., pure water or water that includes an additive such as ethylene glycol or propylene glycol. Preferably the coolant jacket is incorporated into motor casing 1001 as shown, thereby avoiding the additional thermal interface that would result from using a coolant jacket that is separate from the motor casing. In the cross-sectional view provided by Fig. 10, a plurality of cooling tubes 1003 is shown in cross-section, where the cooling tubes are integral to the motor casing. The coolant pumped through cooling tubes 1003 by secondary coolant pump 1005 conductively cools the stator 117 while the primary coolant, pumped by coolant pump 901, provides direct cooling to stator 117, stator end windings 405, rotor 111 and rotor shaft 113. It should be understood that a coolant jacket such as that shown in Fig. 10 may be added to any of the previously described embodiments to provide a secondary cooling system, a feature that is especially beneficial in a high performance motor that generates a significant amount of heat during operation.

Systems and methods have been described in general terms as an aid to understanding details of the invention. In some instances, well-known structures, materials, and/or operations have not been specifically shown or described in detail to avoid obscuring aspects of the invention. In other instances, specific details have been given in order to provide a thorough understanding of the invention. One skilled in the relevant art will recognize that the invention may be embodied in other specific forms, for example to adapt to a particular system or apparatus or situation or material or component. Therefore, the disclosures and descriptions herein are intended to be illustrative, but not limiting, of the scope of the invention.

## Claims

1. A motor assembly (100) with an integrated cooling system, comprising:
a stator (117) contained within a motor enclosure;
a rotor shaft (113), wherein said rotor shaft passes between a first end cap (103) and a second end cap (105) of said motor enclosure (101);
a rotor (111) mounted to said rotor shaft (113), wherein said rotor shaft (113) includes a hollow region (115);
a coolant pump (123) for injecting a coolant into said motor assembly (100);
a coolant reservoir (137) in fluid communication with said coolant pump (123);
a second coolant passageway, (135) wherein said second coolant passageway (135) fluidly couples a region (134) within said motor enclosure (101) to said coolant reservoir (137), and wherein said coolant within said region (134) of said motor enclosure (101) flows into said coolant reservoir (137) via said second coolant passageway; (135) and
a plurality of distribution thru-holes (133) integrated into said rotor shaft (113), wherein each of said plurality of distribution thru-holes (133) fluidly couples said hollow region (115) of said rotor shaft (113) to said region (134) within said motor enclosure (101), wherein said coolant passing from said hollow region (115) to said region (134) within said motor enclosure (101) directly contacts said stator (117) and said rotor (111) prior to flowing through said second passageway (135) into said coolant reservoir (137). **characterized in that** the assembly further comprises a first coolant passageway (125), wherein said first coolant passageway (125) is integral to said first end cap (103), wherein said first coolant passageway (125) fluidly couples said coolant pump (123) to said hollow region (115) of said rotor shaft (113), wherein said first coolant passageway (125) further comprises an output aperture (127) located within a bore of said first end cap (103) and adjacent to said rotor shaft (113), wherein said rotor shaft (113) includes at least one intake thru-hole (131), wherein said coolant flowing through said first coolant passageway (125) and through said output aperture (127) is injected by said coolant pump (123) into said hollow region (115) of said rotor (111) via said at least one intake thru-hole (131); and a first seal (129) and a second seal (130), wherein said first seal (129) and said second seal (130) confines said coolant passing through said first coolant passageway (125) and through said output aperture (127) within a region defined by said rotor shaft (113), said bore of said first end cap (103), said first seal (129) and said second seal (130).

2. The motor assembly (100) of claim 1, wherein said coolant injected into said motor assembly (100) is pressurized.

3. The motor assembly (500) of claim 1 or 2, said first coolant passageway (125) further comprising a gearbox coolant coupling (511), wherein said gearbox coolant coupling (511) fluidly couples said first coolant passageway (125) to a gearbox, wherein said coolant flowing through said first coolant passageway (125) is injected by said coolant pump (123) into said gearbox via said gearbox coolant coupling (511), wherein a third coolant passageway (513) fluidly couples said gearbox to said coolant reservoir (137), and wherein said coolant flowing into said gearbox from said first coolant passageway (125) via said gearbox coolant coupling (511) flows into said coolant reservoir (137) via said third coolant passageway (513).

4. The motor assembly (100) of claim 1, said motor enclosure (101) further comprising an enclosure output aperture (135) located between said stator (117) and an inner wall of said motor enclosure (101), and wherein said coolant within said region (134) of said motor enclosure (101) passes through said enclosure output aperture (135) and said second passageway before flowing into said coolant reservoir (137).

5. The motor assembly (100) of any one of claims 1-4, said plurality of distribution thru-holes (133) comprising at least one distribution thru-hole (133) located adjacent to a first end of said rotor (111) and at least one distribution thru-hole (133) located adjacent to a second end of said rotor (111), wherein an axis corresponding to each of said plurality of distribution thru-holes (133) is either perpendicular or angled relative to a cylindrical axis corresponding to said rotor shaft (113).

6. The motor assembly (800) of any one of claims 1-5, further
comprising a third coolant passageway (803), wherein said third coolant passageway (803) fluidly couples said coolant pump (801) to said region (134) within said motor enclosure (101), wherein said coolant flowing through said third coolant passageway (803) is injected by said coolant pump (801) directly into said region (134) of said motor enclosure (101).

7. The motor assembly (800) of claim 6, further comprising a plurality of nozzles (805) incorporated into said motor enclosure (101), wherein each of said plurality of nozzles (805) is fluidly coupled to said third coolant passageway (803), and wherein said coolant passing through said third coolant passageway (803) into said motor enclosure (101) via said plurality of nozzles (805) directly contacts said stator (117) and said rotor (111) prior to flowing through said second passageway (135) into said coolant reservoir (137).

8. The motor assembly (900) of any one of claims 1-7, further comprising a coolant jacket surrounding at least a portion of said motor assembly (900), wherein a secondary coolant flows through said coolant jacket, and wherein a second cooling pump (1005) circulates said secondary coolant throughout said coolant jacket via a cooling conduit (1003).

9. The motor assembly (100) of any one of claims 1-7, wherein said coolant pump (123) is comprised of an electric coolant pump.

10. The motor assembly (600) of any one of claims 1-7, wherein said coolant pump (123) is comprised of a mechanical coolant pump, and wherein said mechanical coolant pump is powered by rotation of said rotor shaft (113).

## Patentansprüche

1. Motoranordnung (100) mit integriertem Kühlsystem, umfassend:
einen in einem Motorgehäuse angebrachten Stator (117);
eine Rotorwelle (113), wobei die Rotorwelle zwischen einer ersten Endkappe (103) und einer zweiten Endkappe (105) des Motorgehäuses verläuft;
einen an der Rotorwelle (113) angebrachten Rotor (111), wobei die Rotorwelle (113) einen hohlen Bereich (115) aufweist;
eine Kühlmittelpumpe (123) zum Einspritzen eines Kühlmittels in die Motoranordnung (100);
ein Kühlmittelreservoir (137) in Fluidverbindung mit der Kühlmittelpumpe (123);
einen zweiten Kühlmittelkanal (135), wobei der zweite Kühlmittelkanal (135) eine Fluidkopplung eines Bereichs (134) innerhalb des Motorgehäuses (101) mit dem Kühlmittelreservoir (137) bildet, und wobei das Kühlmittel innerhalb des Bereichs (134) des Motorgehäuses (101) über den zweiten Kühlmittelkanal (135) in das Kühlmittelreservoir (137) fließt; und
eine Vielzahl von in der Rotorwelle (113) integrierten Verteilungsdurchgangslöchern (133), wobei jedes der Vielzahl von Verteilungsdurchgangslöchern (133) eine Fluidkopplung des hohlen Bereichs (115) der Rotorwelle (13) mit dem Bereich (134) innerhalb des Motorgehäuses (101) bildet, wobei das von dem hohlen Bereich (115) zu dem Bereich (134) innerhalb des Motorgehäuses fließende Kühlmittel in direktem Kontakt steht mit dem Stator (117) und dem Rotor (111), bevor es durch den zweiten Kühlmittelkanal (135) in das Kühlmittelreservoir (137) fließt;
**dadurch gekennzeichnet, dass**
die Anordnung ferner einen ersten Kühlmittelkanal (125) aufweist, wobei der erste Kühlmittelkanal (125) in die erste Endkappe (103) integriert ist, wobei der erste Kühlmittelkanal (125) eine Fluidkopplung zwischen der Kühlmittelpumpe (123) und dem hohlen Bereich (115) der Rotorwelle (113) bildet, wobei der erste Kühlmittelkanal (125) ferner eine in einer Bohrung der ersten Endkappe (103) und neben der Rotorwelle (113) angeordnete Ausgangsöffnung (127) aufweist, wobei die Rotorwelle (113) zumindest ein Eingangsdurchgangsloch (131) aufweist, wobei das durch den ersten Kühlmittelkanal (125) und die Ausgangsöffnung (127) fließende Kühlmittel mittels der Kühlmittelpumpe (123) durch das zumindest eine Eingangsdurchgangsloch in den hohlen Bereich (115) des Rotors (111) eingespritzt wird; und eine erste Dichtung (129) und eine zweite Dichtung (130), wobei die erste Dichtung (129) und die zweite Dichtung (130) das durch den ersten Kühlmittelkanal (125) und durch die Ausgangsöffnung (127) fließende Kühlmittel in einem durch die Rotorwelle (113), die Bohrung der ersten Endkappe (103), die erste Dichtung (129) und die zweite Dichtung (130) definierten Bereich einschließt.

2. Motoranordnung (100) nach Anspruch 1, wobei das in die Motoranordnung (100) gespritzte Kühlmittel druckbeaufschlagt ist.

3. Motoranordnung (500) nach Anspruch 1 oder 2, wobei der erste Kühlmittelkanal (125) ferner eine Getriebe-Kühlmittel-Kopplung (511) aufweist, wobei die Getriebe-Kühlmittel-Kopplung (511) eine Fluidkopplung zwischen dem ersten Kühlmittelkanal (125) und einem Getriebe bildet, wobei das durch den ersten Kühlmittelkanal (125) fließende Kühlmittel mittels der Kühlmittelpumpe (123) über die Getriebe-Kühlmittel-Kopplung (511) in das Getriebe gespritzt wird, wobei ein dritter Kühlmittelkanal (513) eine Fluidkopplung zwischen dem Getriebe und dem Kühlmittelreservoir (137) bildet, und wobei das von dem ersten Kühlmittelkanal (125) über die Getriebe-Kühlmittel-Kopplung (511) in das Getriebe fließende Kühlmittel über den dritten Kühlmittelkanal (513) in das Kühlmittelreservoir (137) fließt.

4. Motoranordnung (100) nach Anspruch 1, wobei das Motorgehäuse (101) ferner eine zwischen dem Stator (117) und einer inneren Wand des Motorgehäuses (101) angeordnete Gehäuseausgangsöffnung (135) aufweist, und wobei das Kühlmittel innerhalb des Bereichs (134) des Motorgehäuses (101) die Gehäuseausgangsöffnung (135) und den zweiten Kühlmittelkanal durchströmt, bevor es in das Kühlmittelreservoir (137) fließt.

5. Motoranordnung (100) nach einem der Ansprüche 1-4, wobei die Vielzahl von Verteilungsdurchgangslöchern (133) zumindest ein neben einem ersten Ende des Rotors (111) angeordnetes Verteilungsdurchgangsloch (133) und zumindest ein neben einem zweiten Ende des Rotors (111) angeordnetes Verteilungsdurchgangsloch (133) aufweist, wobei eine jedem der Vielzahl von Verteilungsdurchgangslöchern (133) entsprechende Achse entweder senkrecht oder in einem Winkel bezüglich einer der Rotorwelle (113) entsprechenden zylindrischen Achse verläuft.

6. Motoranordnung (800) nach einem der Ansprüche 1-5, ferner umfassend einen dritten Kühlmittelkanal (803), wobei der dritte Kühlmittelkanal (803) eine Fluidkopplung zwischen der Kühlmittelpumpe (801) und dem Bereich (134) innerhalb des Motorgehäuses (101) bildet, wobei das durch den dritten Kühlmittelkanal (803) fließende Kühlmittel mittels der Kühlmittelpumpe (801) direkt in den Bereich (134) innerhalb des Motorgehäuses (101) gespritzt wird.

7. Motoranordnung (800) nach Anspruch 6, ferner umfassend eine Vielzahl von in dem Motorgehäuse (101) integrierten Düsen (805), wobei jede der Vielzahl von Düsen (805) mit dem dritten Kühlmittelkanal (803) flüssigkeitsgekoppelt ist, und wobei das durch den dritten Kühlmittelkanal (803) über die Vielzahl von Düsen (805) in das Motorgehäuse (101) fließende Kühlmittel den Stator (117) und den Rotor (111) direkt kontaktiert, bevor es durch den zweiten Kanal (135) in das Kühlmittelreservoir (137) fließt.

8. Motoranordnung (900) nach einem der Ansprüche 1-7, ferner umfassend einen zumindest einen Teil der Motoranordnung (900) umgebenden Kühlmantel, wobei ein sekundäres Kühlmittel durch den Kühlmantel fließt, und wobei eine zweite Kühlmittelpumpe (1005) das sekundäre Kühlmittel über eine Kühlmittelleitung (1003) durch den gesamten Kühlmantel zirkulieren lässt.

9. Motoranordnung (100) nach einem der Ansprüche 1-7, wobei die Kühlmittelpumpe (123) aus einer elektrische Kühlmittelpumpe besteht.

10. Motoranordnung (600) nach einem der Ansprüche 1-7, wobei die Kühlmittelpumpe (123) aus einer mechanischen Kühlmittelpumpe besteht, und wobei die mechanische Kühlmittelpumpe durch Drehung der Rotorwelle (113) betrieben wird.

## Revendications

1. Un ensemble de moteur (100) avec un système de refroidissement intégré, comprenant:
un stator (117) contenu dans une carcasse de moteur;
un arbre de rotor (113), dans lequel ledit arbre de rotor passe entre un premier capuchon d'extrémité (103) et un deuxième capuchon d'extrémité (105) de ladite carcasse de moteur (101);
un rotor (111) monté sur ledit arbre de rotor (113), dans lequel ledit arbre de rotor (113) comprend une région creuse (115);
une pompe à réfrigérant (123) pour injecter un réfrigérant dans ledit ensemble de moteur (100);
un réservoir de réfrigérant (137) en communication fluidique avec ladite pompe à réfrigérant (123);
un deuxième passage de réfrigérant (135), dans lequel ledit deuxième passage de réfrigérant (135) couple de manière fluidique une région (134) dans ladite carcasse de moteur (101) audit réservoir de réfrigérant (137) et dans lequel ledit réfrigérant dans ladite région (134) de ladite carcasse de moteur (101) s'écoule dans ledit réservoir de réfrigérant (137) via ledit deuxième passage de réfrigérant (135); et
une pluralité de trous traversants de distribution (133) intégrés dans ledit arbre de rotor (113), dans lequel chacun de ladite pluralité de trous traversants de distribution (133) couple de manière fluidique ladite région creuse (115) dudit arbre de rotor (113) à ladite région (134) dans ladite carcasse de moteur (101), dans lequel ledit réfrigérant passant de ladite région creuse (115) à ladite région (134) dans ladite carcasse du moteur (101) entre en contact direct avec ledit stator (117) et ledit rotor (111) avant de s'écouler à travers ledit deuxième passage de réfrigérant (135) dans ledit réservoir de réfrigérant (137);
**caractérisé en ce que**
l'ensemble comprend en outre un premier passage de réfrigérant (125), dans lequel ledit premier passage de réfrigérant (125) est intégrée audit premier capuchon d'extrémité (103), dans lequel ledit premier passage de réfrigérant (125) couple de manière fluidique ladite pompe à réfrigérant (123) avec ladite région creuse (115) dudit arbre de rotor (113), dans lequel ledit premier passage de réfrigérant (125) comprend en outre une ouverture de sortie (127) située dans un alésage dudit premier capuchon d'extrémité (103) et adjacente audit arbre de rotor (113), dans lequel ledit arbre de rotor (113) comprend au moins un trou d'admission (131), dans lequel ledit réfrigérant s'écoulant à travers ledit premier passage de réfrigérant (125) et à travers ladite ouverture de sortie (127) est injecté par ladite pompe à réfrigérant (123) dans ladite région creuse (115) dudit rotor (111) via ledit au moins un trou d'amission (131); et un premier dispositif d'étanchéité (129) et un deuxième dispositif d'étanchéité (130), dans lequel ledit premier dispositif d'étanchéité (129) et ledit deuxième dispositif d'étanchéité (130) confine ledit réfrigérant passant à travers ledit premier passage de réfrigérant (125) et à travers ladite ouverture de sortie (127) dans une région définie par ledit arbre de rotor (113), ledit alésage dudit premier capuchon d'extrémité (103), ledit premier dispositif d'étanchéité (129) et ledit deuxième dispositif d'étanchéité (130).

2. L'ensemble de moteur (100) selon la revendication 1, dans lequel ledit réfrigérant injecté dans ledit ensemble de moteur (100) est mis sous pression.

3. L'ensemble de moteur (500) selon revendication 1 ou 2, ledit premier passage de réfrigérant (125) comprenant en outre un couplage de réfrigérant de boîte de vitesses (511), dans lequel ledit couplage de réfrigérant de boîte de vitesses (511) couple de manière fluidique ledit premier passage de réfrigérant (125) à une boîte de vitesses, dans lequel ledit réfrigérant s'écoulant à travers ledit premier passage de réfrigérant (125) est injecté par ladite pompe à réfrigérant (123) dans ladite boîte de vitesses via ledit couplage de réfrigérant de boîte de vitesses (511), dans lequel un troisième passage de réfrigérant (513) couple de manière fluide ladite boîte de vitesses audit réservoir de réfrigérant (137), et dans lequel ledit réfrigérant s'écoulant dans ladite boîte de vitesses depuis ledit premier passage de réfrigérant (125) via ledit couplage de réfrigérant de boîte de vitesses (511) s'écoule dans ledit réservoir de réfrigérant (137) via ledit troisième passage de réfrigérant (513).

4. L'ensemble de moteur (100) selon la revendication 1, ladite carcasse de moteur (101) comprenant en outre un ouverture de sortie de carcasse (135) situé entre ledit stator (117) et une paroi interne de ladite carcasse de moteur (101), et dans lequel ledit réfrigérant dans ladite région (134) de ladite carcasse de moteur (101) passe à travers ledit ouverture de sortie de carcasse (135) et ledit deuxième passage avant de s'écoulant dans ledit réservoir de réfrigérant (137).

5. L'ensemble de moteur (100) selon l'une quelconque des revendications 1-4, ladite pluralité de distribution trous traversants (133) comprenant au moins une distribution trous traversants (133) situé adjacent à une première extrémité dudit rotor (111) et au moins une distribution trous traversants (133) situé adjacent à une seconde extrémité dudit rotor (111), dans lequel un axe correspondant à chacun de ladite pluralité de distribution trous traversants (133) soit perpendiculaire soit angulaire par rapport à un axe cylindrique correspondant audit arbre de rotor (113).

6. L'ensemble de moteur (800) selon l'une quelconque des revendications 1-5, comprenant en outre un troisième passage de réfrigérant (803), dans lequel ledit troisième passage de réfrigérant (803) couple de manière fluide ladite pompe à réfrigérant (801) à ladite région (134) à l'intérieur de ladite carcasse de moteur (101), dans lequel ledit réfrigérant s'écoulant à travers ledit troisième passage de réfrigérant (803) est injecté par ladite pompe à réfrigérant (801) directement dans ladite région (134) de ladite carcasse de moteur.

7. L'ensemble de moteur (800) selon la revendication 6, comprenant en outre une pluralité de buses (805) incorporées dans ladite carcasse de moteur (101), dans lequel chacune de ladite pluralité de buses (805) est couplée de manière fluide audit troisième passage de réfrigérant (803), et dans lequel ledit réfrigérant traversant ledit troisième passage de réfrigérant (803) dans ladite carcasse de moteur (101) via ladite pluralité de buses (805) vient directement en contact avec ledit stator (117) et ledit rotor (111) avant de s'écouler à travers ledit deuxième passage (135) dans ledit réservoir de réfrigérant (137).

8. L'ensemble de moteur (900) selon l'une quelconque des revendications 1-7, comprenant en outre une chemise de refroidissement entourant au moins une partie dudit ensemble de moteur (900), dans lequel un réfrigérant secondaire s'écoule à travers ladite chemise de refroidissement, et dans lequel une deuxième pompe de refroidissement (1005) fait circuler ledit deuxième réfrigérant dans toute ladite chemise de refroidissement via un conduit de refroidissement (1003).

9. L'ensemble de moteur (100) selon l'une quelconque des revendications 1-7, dans lequel ladite pompe à réfrigérant (123) est constituée d'une pompe de refroidissement électrique.

10. L'ensemble de moteur (600) selon l'une quelconque des revendications 1-7, dans lequel ladite pompe à réfrigérant (123) est constituée d'une pompe de refroidissement mécanique, et dans lequel ladite pompe de refroidissement mécanique est alimentée par la rotation dudit arbre de rotor (113).
